# EUROPEAN PATENT APPLICATION

(11) **EP 1 028 366 A2**
(43) Date of publication of application: **16.08.2000**
(21) Application number: 99111654.2
(22) Date of filing: 16.06.1999
(51) Int. Cl.: G06F 3/033

(54) **Motion driven access to object viewers**

(30) Priority: 12.02.1999 US 119916 P; 08.06.1999 US 328053 P
(71) Applicant: Vega Vista, Inc., Sunnyvale, CA 94086 (US)
(72) Inventor: Flack, James F., Los Altos Hills, California 94086 (US); Fateh, Sina, Sunnyvale, California 94087 (US)
(74) Representative: Kahler, Kurt, Dipl.-Ing.

(57) **Abstract**

The present invention provides a variety of systems and methods for assisting a user in the control and operation of a computer system having a virtual desktop. By tracking the movements of the display device (118) and adjusting certain portions of the virtual desktop, the user is able to traverse, in its entirety, the information content mapped to the virtual desktop. In this manner, the user may examine a particular portion or segment of the information content which is of interest to the user. Additionally, in response to a command entered by the user, the present invention virtually magnifies the displayed information, updating in a manner correlated to the tracked movement of the display device (118). Further, by redefining the orientation of portions of the virtual desktop, the present invention enables portions displayed via the display device (118) to change in response to a request by a user.

## Description

### BACKGROUND OF THE INVENTION

The present invention relates generally to user interfaces. Specifically, this invention discloses a variety of methods and computer interfaces suitable for motion driven navigation of multi-dimensional object databases.

In the last few decades, enormous progress has occurred in developing and perfecting interactions between humans and computer systems. Improvements in user interfaces along with improvements in data capacity, display flexibility, and communication capabilities have lead to the wide spread use of applications such as e-mail, FAX, and map programs. While a discussion of the various stages of user interface evolution is unnecessary, the following highlights of that evolution are illustrative, providing a basis for understanding the utility of the invention claimed herein.

Traditional computer human interfaces 10 exist in a variety of shapes and forms including desktop computers, remote terminals, and portables such as laptop computers, notebook computers, hand held computers, and wearable computers.

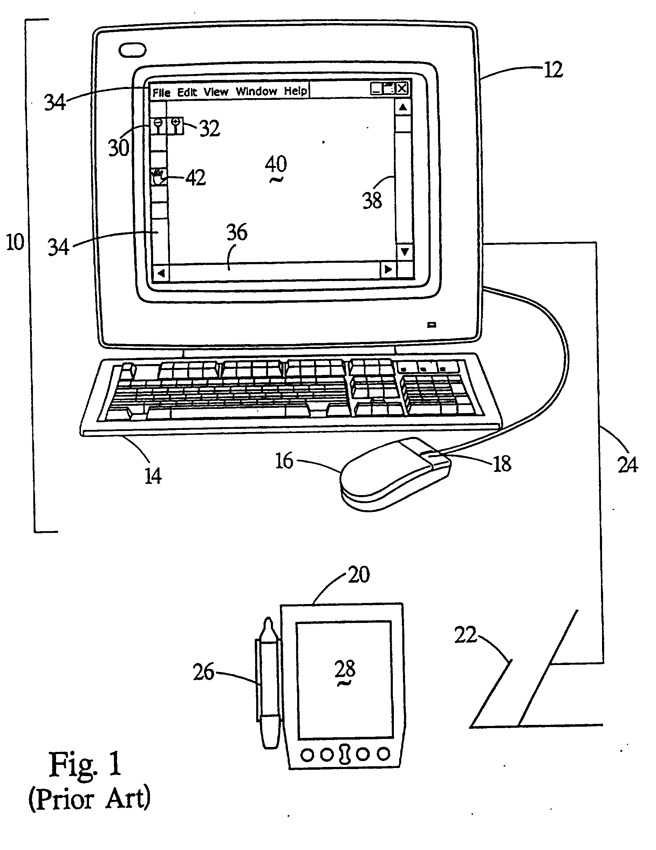

In the beginning of the personal computer era, there was the desktop computer, which is still in use today. FIGURE 1 displays a traditional desktop computer human interface 10 and a Personal Digital Assistant 20. The traditional computer 10 typically includes a display device 12, a keyboard 14, and a pointing device 16. The display device 12 is normally physically connected to the keyboard 14 and pointing device 16. The pointing device 16 and buttons 18 may be physically integrated into the keyboard 14.

In the traditional desktop computer human interface 10, the keyboard 14 is used to enter data into the computer system. In addition, the user can control the computer system using the pointing device 16 by making selections on the display device 12. For example, using the pointing device the user can scroll the viewing area by selecting the vertical 38 or horizontal 36 scroll bar. Although the desktop computer was sufficient for the average user, as manufacturing technology increased, personal computers began to become more portable, resulting in notebook and hand held computers.

Notebook and hand held computers are often made of two mechanically linked components, one essentially containing the display device 12 and the other, the keyboard 14 and pointing device 16. Hinges often link these two mechanical components, often with flexible ribbon cabling connecting the components and embedded in the hinging mechanism. The two components can be closed like a book, often latching to minimize inadvertent opening. The notebook greatly increased the portability of personal computers. However, in the 1990's, a new computer interface paradigm began which gave even greater freedom, known as the Personal Digital Assistant (PDA hereafter) 20.

One of the first commercially successful PDAs was the Palm product line manufactured by 3Com. These machines are quite small, light weight and relatively inexpensive, often fitting in a shirt pocket, weighing a few ounces, and costing less than $400 when introduced. These machines possess very little memory (often less than 2 megabytes), a small display 28 (roughly 6 cm by 6 cm) and no physical keyboard. The pen-like pointing device 26, often stored next to or on the PDA 20, is applied to the display area 28 to support its user making choices and interacting with the PDA device 20. External communication is often established via a serial port in the PDA connecting to the cradle 22 connected by wire line 24 to a traditional computer 10. As will be appreciated, PDAs such as the PalmPilot™ have demonstrated the commercial reliability of this style of computer interface.

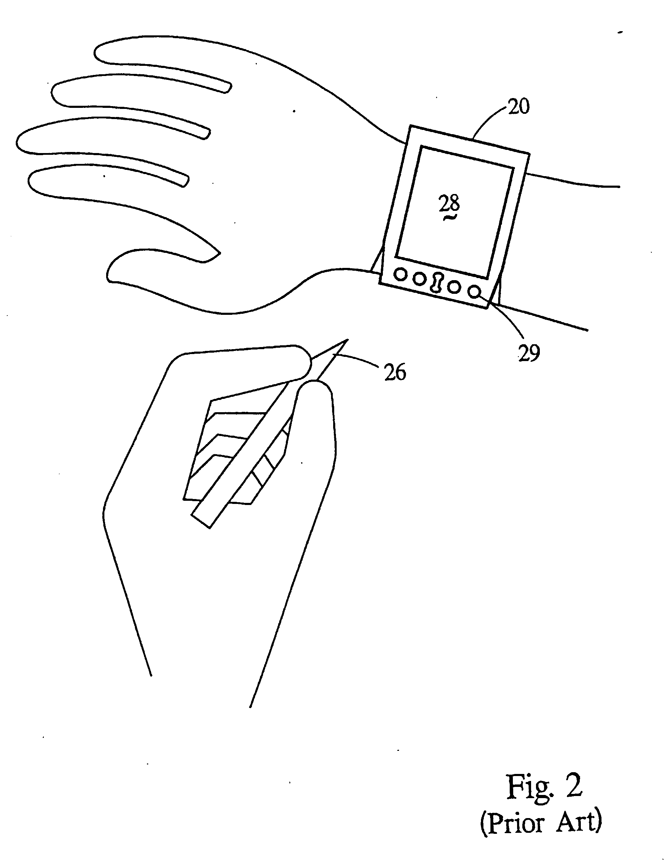

FIGURE 2 displays a prior art Personal Digital Assistant 20 in typical operation, in this case, strapped upon the wrist of its user. At least one company, Orang-otang Computers, Inc. sells a family of wrist mountable cases for a variety of different PDAs. The pen pointer 26 is held in one hand and the PDA 20 is on the wrist of the other hand. The display area 28 is often quite small compared to traditional computer displays 12. In the case of the Palm product line, the display area 28 contains an array of 160 pixels by 160 pixels in a 6 cm by 6 cm viewing area. Often, part of the display area is further allocated to menus and the like, further limiting the viewing area for a 2-D object such as a FAX page. However, this problem has been partially addressed. The menu bar 34 found on most traditional computer-human interface displays 12 is usually invisible on a PDA display 28 except when a menu button 29 is pressed.

Two-dimensional object database programs, such as the map viewer, have evolved a fairly consistent set of functions for viewing two-dimensional sheets. In many situations, the two-dimensional object being viewed is bigger than the display can simultaneously display, necessitating controls to horizontally and vertically scroll the displayed region across the 2-D object. Such functions often possess visible controls accessed via a pointing device. As shown in FIGURE 1, horizontal scrolling is often controlled by a slider bar 36 horizontally aligned with a viewing region 40. Vertical scrolling is often controlled by a vertical slider bar 38 vertically aligned with a viewing region 40. Often such database interfaces possess the ability to scroll in directions other than just the orthogonal directions of vertical and horizontal. This ability is usually controlled by pointing to a hand icon 42 which is then moved relative to the viewing area 40, while holding down a button 18.

In addition, 2-D object viewers often incorporate the ability to zoom in or out to control the resolution of detail and the amount of information visible upon the display device. Zoom out 30 and Zoom in 32 controls are often either immediately visible or available from a pull down menu as items in one or more menu bars 34.

Finally, 2-D object viewers often include the ability to traverse a hierarchical organization of collections of 2-D objects, such as folders of e-mail messages, log files of FAXes, project directories of schematics or floor plans, and folders of various levels of sub-systems within a complex system database.

In summary, traditional computer human interfaces 10 have been employed in a variety of settings to interact with 2-D object programs and systems. On the surface, they would seem quite capable of providing a reasonable interface. But there are limitations. When the size (width and/or height) of the 2-D object to be displayed is larger than the size of the display screen itself, a method must be used to control what portion of the 2-D object is to be displayed on the small screen at any given time. Various methods have been devised to activate pan and scroll functions such as pushing an "arrow" key to shift the display contents in predefined increments in the direction indicated by the arrow key. Alternatively, a pen pointer or stylus can be used to activate pan and scroll functions to shift the display contents. In all these examples, the physical display device remains relatively stationary and the larger 2-D object is viewed piece-wise and sequentially in small segments corresponding to the limitations of the physical size of the display screen.

In actual practice, these typical methods have many inherent problems. If the display is small relative to the 2-D object to be viewed, many individual steps are necessary for the entire 2-D object to be viewed as a sequence of displayed segments. This process may require many sequential command inputs using arrow keys or pen taps, which is tedious, and the context relationship between the current segment displayed on the screen and the overall content of the 2-D object can easily become confusing. What is needed is a system that provides a simple and convenient method to control the display contents that also preserves the users understanding of the relationship between the current segment on the display and the overall content of the 2-D object. Such a method is of particular value for hand-held electronic devices with small display screens that must satisfy the conflicting requirements of being small and convenient plus having the performance and utility of modern lap-top or desk-top computers.

### SUMMARY OF THE INVENTION

The present invention addresses the aforementioned problems by providing new methods to control the contents presented on a small display screen. The present invention allows the user to traverse any and all segments of a large two-dimensional object using a hand-held device with a small display screen and motion. By moving the device in the direction the user is interested in, the user is allowed to traverse a two-dimensional object that is much larger than the display.

A device in accordance with one aspect of the present invention includes a digital processor, a motion sensor, a display device, and a computer readable medium. The processor executes a 2-D object database program with an accessible control list including at least one degree of freedom in the controls. The motion sensor is interfaced to the processor providing from time to time a motion data vector to the processor. The processor from time to time generates a parameter list containing at least one of a parameter collection based upon the provided motion data vector. The processor from time to time accesses and asserts at least one of the corresponding controls of the 2-D object database program based upon the generated parameter list.

Another aspect of the present invention provides a method for assisting a user in preserving awareness of the context of each displayed segment during the control and operation of a computer system while traversing two-dimensional objects. This method begins by mapping the full size two-dimensional object intended for display by the computer system into a virtual desktop. Next, a certain portion of the virtual desktop is actually displayed. Then the movement of the device is tracked and the displayed portion of the virtual desktop changed in a manner correlated to the tracked movement of the device.

In especially preferred embodiments, the aforementioned 2-D object is a type of detailed information, for example a geographic map, electronic schematic, or text document. The hand-held device is a personal digital assistant (PDA), capable of running multiple applications simultaneously. This aspect of the present invention allows the user to traverse the 2-D as described above. In addition, the user can use other functions of the PDA, such as taking notes or recording messages, while using the virtual map display management application of the present invention.

### BRIEF DESCRIPTION OF THE DRAWINGS

FIGURE 1 displays a prior art system including a traditional computer human interface and a Personal Digital Assistant;
FIGURE 2 displays a prior art Personal Digital Assistant in typical operation;
FIGURE 3 depicts a hand held computer with an attachment incorporating a motion sensor in accordance with one embodiment of the current invention and the motion template to be used hereafter to describe the user's control interaction;
FIGURE 4 depicts a system block diagram in accordance with one preferred embodiment of the current invention with an embedded database incorporated in the processor and local motion sensor;
FIGURE 5 depicts a system block diagram in accordance with one preferred embodiment of the current invention with a remote motion sensor;
FIGURE 6 depicts a system block diagram in accordance with one preferred embodiment of the current invention with a virtual space navigator;
FIGURE 7 depicts the initial display for a map viewing application in accordance with one embodiment of the current invention with the user indicating a zoom and scroll to focus in on California;
FIGURE 8 depicts the result of the user control interaction of the previous figure showing a map of California and displaying the next user control interaction, which will cause the display to zoom and focus on the San Francisco Bay Area;
FIGURE 9 depicts the result of the user control interaction of the previous figure showing a map of San Francisco Bay Area and displaying the next user control interaction, which will cause the display to zoom and focus on the waterfront of San Francisco;
FIGURE 10, 11 and 12 depict the results of the user control interaction of the previous figure showing a map of the San Francisco waterfront and displaying the next user control interaction, which will cause the display to zoom and focus on a portion of the San Francisco waterfront;
FIGURE 13 depicts the result of rotational movement of the hand held computer without a rotational sensor;
FIGURE 14 depicts two views of a hand held computer incorporating a motion sensor for sensing movement relative to a surface in accordance with one embodiment of the present invention;
FIGURE 15 depicts a hand held computer utilizing a motion sensor for sensing movement relative to a surface, in use; and
FIGURE 16 depicts a hand held computer in conjunction with a laptop and desktop computer in accordance with one embodiment of the present invention.

### DETAILED DESCRIPTION OF THE INVENTION

Central to this invention is the concept that motion of a display device controls an object viewer, where the object being viewed is typically essentially stationary in virtual space in the plane surrounding the display device. Motion sensing of the display may be done by a variety of different approaches including motion sensors mounted on the display device as well as motion sensing derived by the interaction of multiple disparate wireless sensing sites.

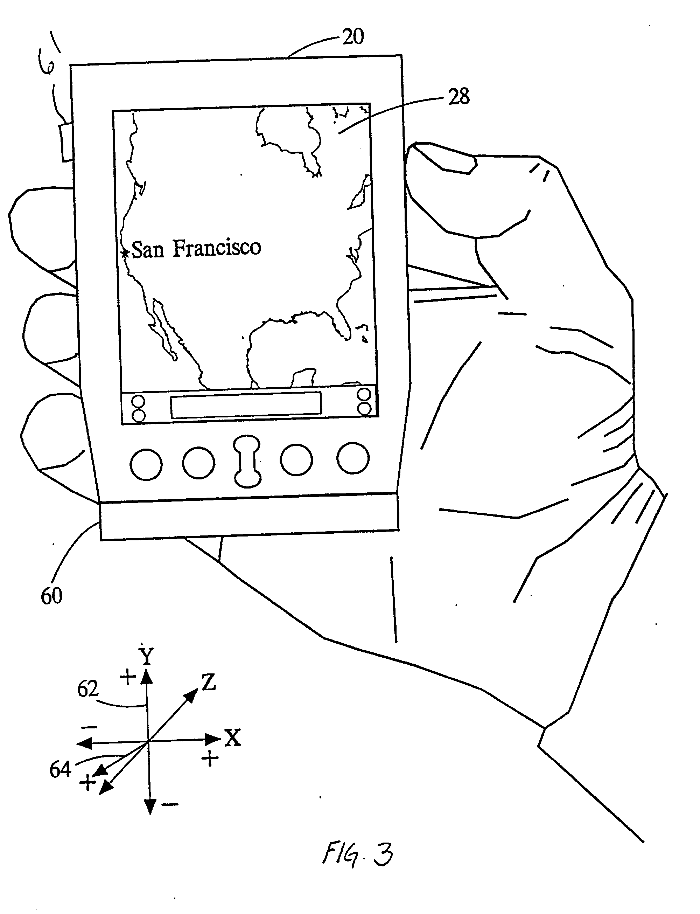

FIGURE 3 depicts a hand held computer 20 in accordance with one embodiment of the current invention, including an attachment 60 incorporating a motion sensor. Also included in FIGURE 3 is a motion template 62 to be used hereafter to describe the user's control interaction. Note that in some preferred embodiments, a motion sensor may be embedded into the hand held device and an add-on attachment 60 would be rendered unnecessary. The hand held computer 20 is considered to have a processor internal to the case 20 controlling the display device 28.

Throughout this discussion, the term motion sensor applies to any and all techniques that enable the determination of movement of the display.

Motion sensors may be categorized as "inside-out" or "outside-in" type approaches. An "inside-out" approach typically mounts the motion sensing device(s) directly within or upon the display device whose motion is to be measured. An "outside-in" approach typically uses external methods to track the display device unit and thus measure its motion. In an "outside-in" approach, the device whose motion is being measured may include some feature(s) such as passive reflective targets to facilitate the tracking and measurement by external sensors. The motion information from external sensors in an "outside-in" type approach would then be transmitted by radio, infrared, or other means, to the computer controlling the contents of the display device.

Additionally, the term motion sensor applies to methods that provide either absolute or relative measurements of motion. Examples of an absolute motion sensor include inertial or gyroscopic sensor devices or radio measurements from a Global Positioning System (GPS). Examples of a relative motion sensor include proximity measurement devices sensing position relative to another object or friction driven sensors indicating relative movement of the display device with respect to a reference surface such as a table top.

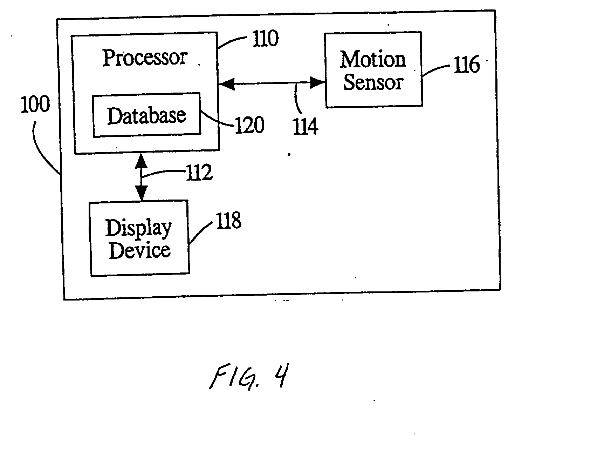

The motion sensor incorporated in attachment 60, or possibly found internal to the hand held device, would preferably include a mechanism providing the internal processor with a motion vector measurement. Note that the motion sensor may be further composed of multiple subsidiary sensors, each providing a component of the motion vector. Further note that the various components of the motion vector measurement may be sampled at differing rates. The subsidiary sensors may possess differing controls. For example, a network of two or three accelerometers in a rigid orthogonal arrangement would preferably possess independent offset controls. Such subsidiary sensors may not be identical in structure or function. FIGURE 4 depicts such system. The processor 110 incorporates an embedded database 120. Coupled to the processor via connection 114 are motion sensors 116. Also coupled to the processor via connection 112 is a display device 118. Certain applications might preferably possess a variety of motion sensor types, for example a gyroscope and an accelerometer arrangement to increase the ability to determine rotation of the hand held display device, while simultaneously determining translational motion.

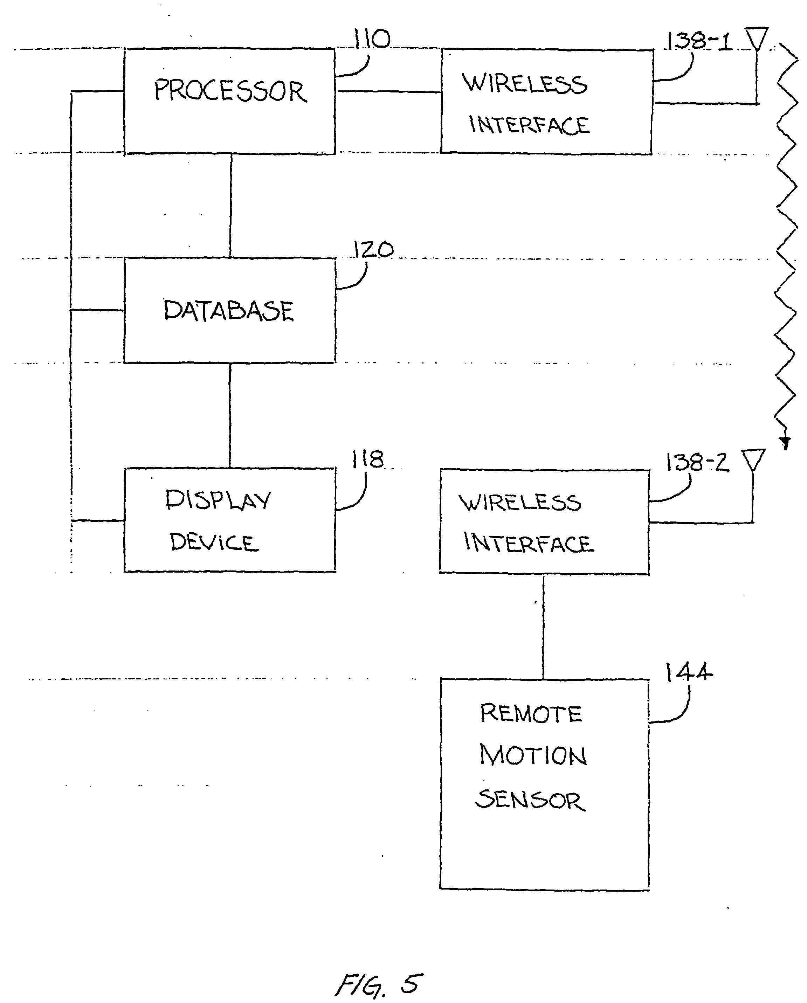

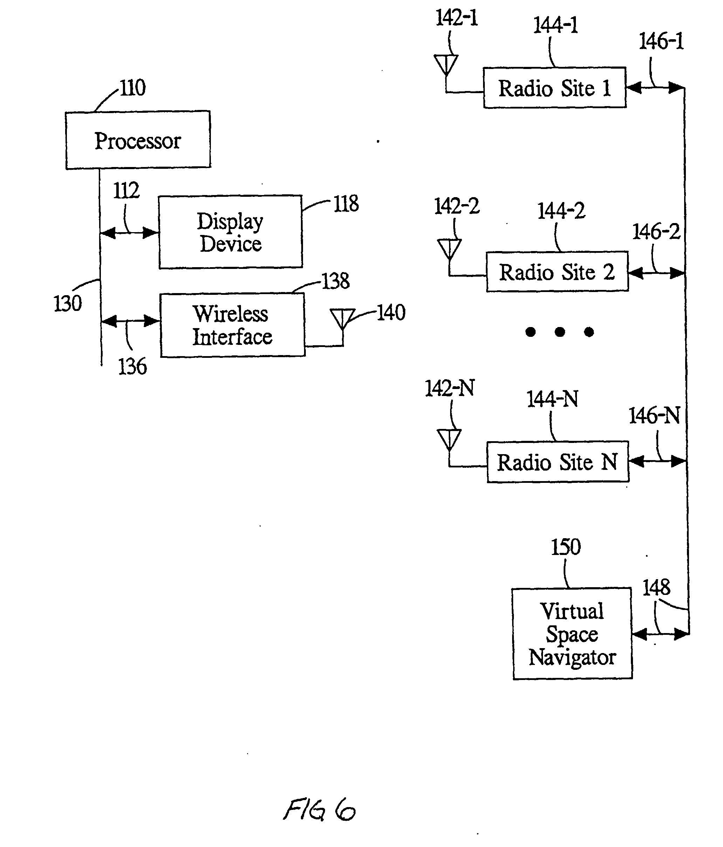

A system might possess a wireless remote motion sensor or virtual space navigator. FIGURE 5 depicts a system with a remote motion sensor. The processor 110 is connected to a database 120 and a display device 118. The processor is also connected to a remote motion sensor 144 via wireless interfaces 138-1 and 138-2. FIGURE 6 depicts a system with a virtual space navigator. The processor 110 is coupled to a display device 118 and a virtual space navigator 150 via wireless interface 138 and radio sites 1 through N. Both the remote sensor and virtual space navigator are capable of sensing the motion of the hand held device and contributing to the motion vector measurement. In addition, both systems are capable of transferring additional data to the user, such as time, date, and information about a specific location. Thus, using a wireless remote motion sensor, the user has access to more information than can normally be stored within the hand held unit.

The internal processor uses the motion vector measurements provided by the motion sensors to generate a motion vector against some frame of reference. Some preferred embodiments will tend to use a 2-D frame of reference, other embodiments will use a 3-D frame of reference. Some preferred embodiments will use a rectilinear axis system, other embodiments will use a radial axis system. Some preferred embodiments will position the origin relative to some point of the body, such as the chest or arm, while other embodiments will position the origin locally within the device itself.

The hand held device 20 may be further preferably augmented with at least button 61 on one side of the hand held computer 20, for example, to activate and/or deactivate the motion controlled display management function. Note that for the purpose of this invention, such buttons may be positioned on any side or face of the hand held device 20.

The present invention has a variety of practical uses. One embodiment of the present invention would allow a user to traverse a map database using only motion. FIGURE 3 depicts a hand held computer 20 running a map viewer database application. The database contains maps of various U. S. geographic regions for display on the computer display device 28.

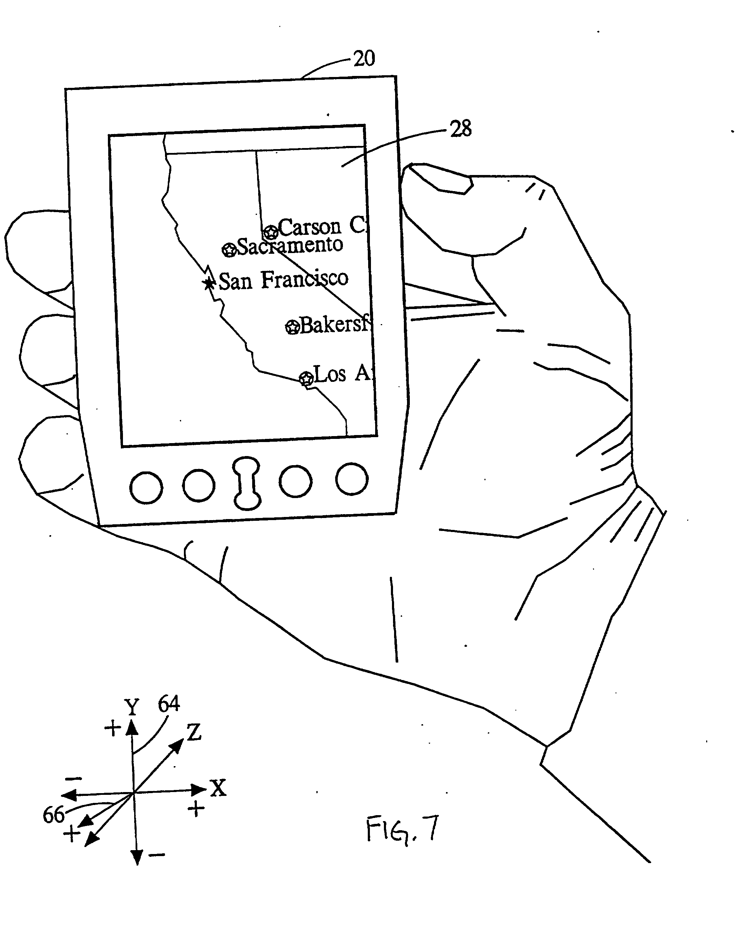

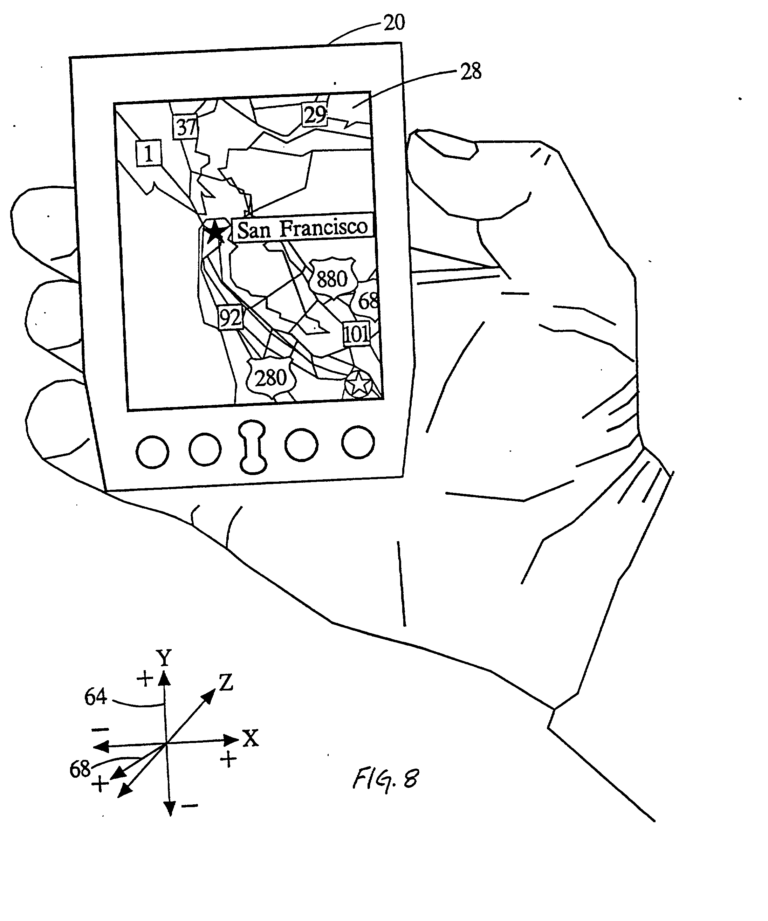

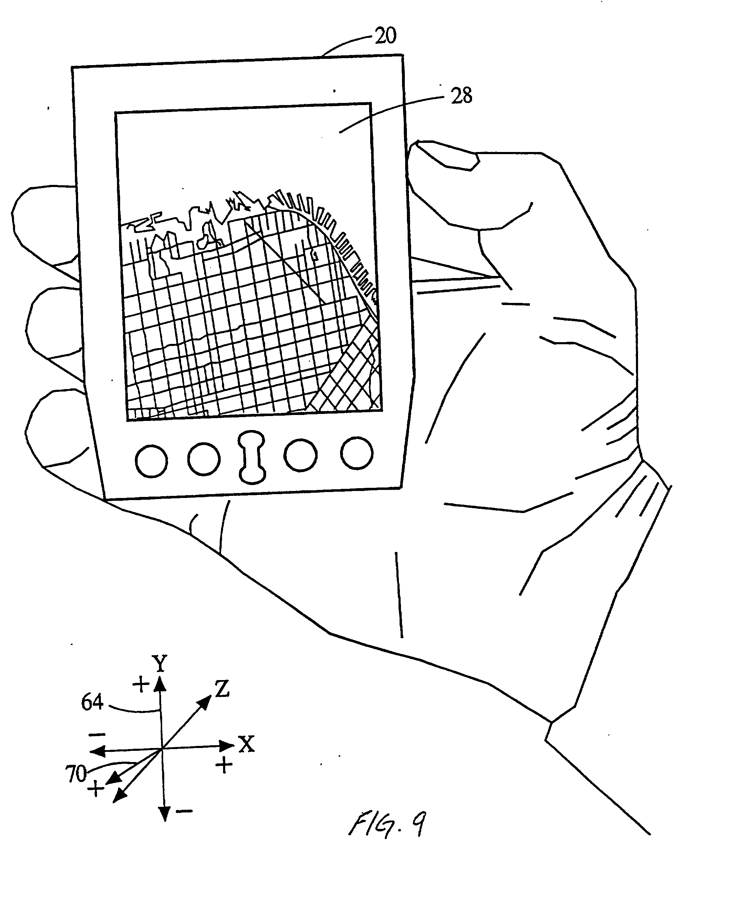

By moving the hand held computer 20 along the positive z-axis, the user can zoom to a more specific region of the map, such as a closer view of California as depicted in FIGURE 7. Continued movement along the positive z-axis allows the user to zoom to more specific regions, such as the San Francisco Bay Area (FIGURE 8), the San Francisco waterfront (FIGURE 9), and finally to a detailed street map of the San Francisco waterfront (FIGURES 10, 11, and 12).

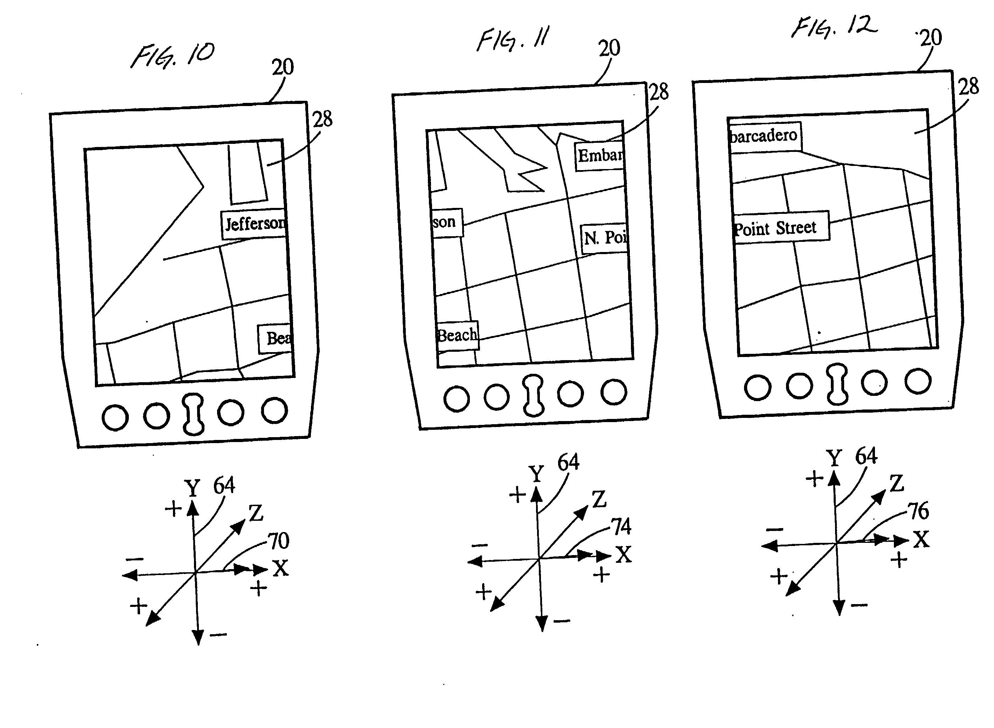

At any zoom level, the user can move the hand held computer 20 along the x-axis, y-axis, or both, to explore the map in the corresponding direction. FIGURE 10 depicts an area of the San Francisco waterfront. By moving the hand held computer 20 along the positive x-axis 70, the user can explore the map in an eastward direction as depicted in FIGURE 11. Continued movement along the positive x-axis 74 will result in more eastward exploration as depicted in FIGURE 12.

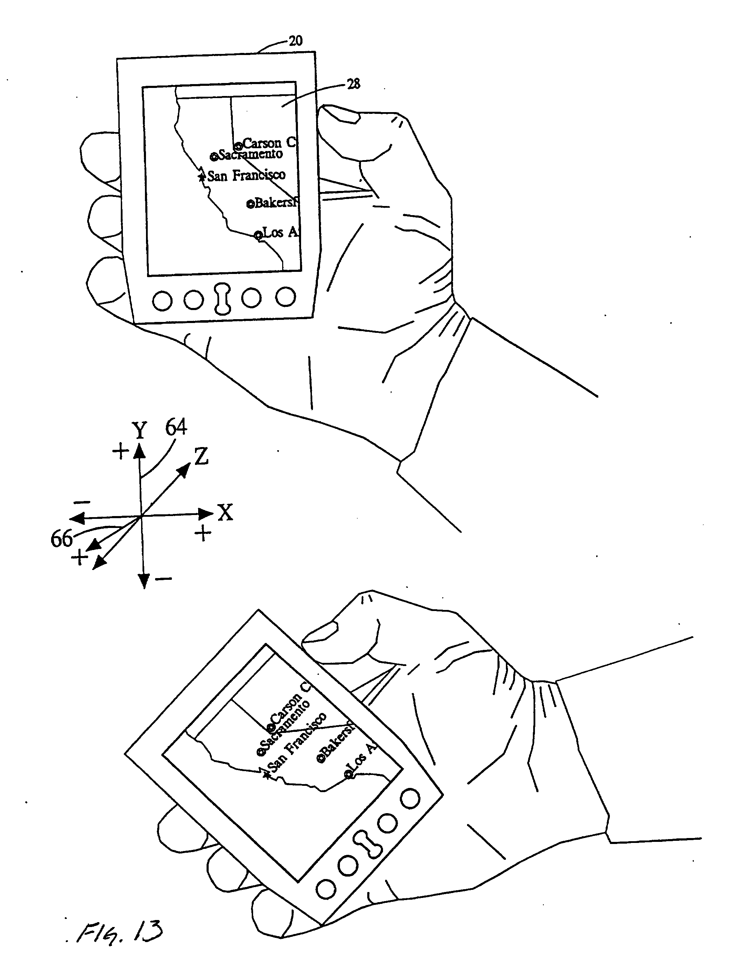

FIGURE 13 depicts the result of rotational movement of the hand held computer 20. In this case the display 28 does not change when the computer 20 is rotated along an axis. Note, however, that other embodiments of the invention may include a rotational sensor allowing the invention to track rotation of the computer 20. A gyroscope, for example, would allow the display 28 to be altered according to the rotation of the computer 20. This embodiment would enable a 2-D display to be rotated in 3-D space to present various viewpoints of a 3-D database within the device.

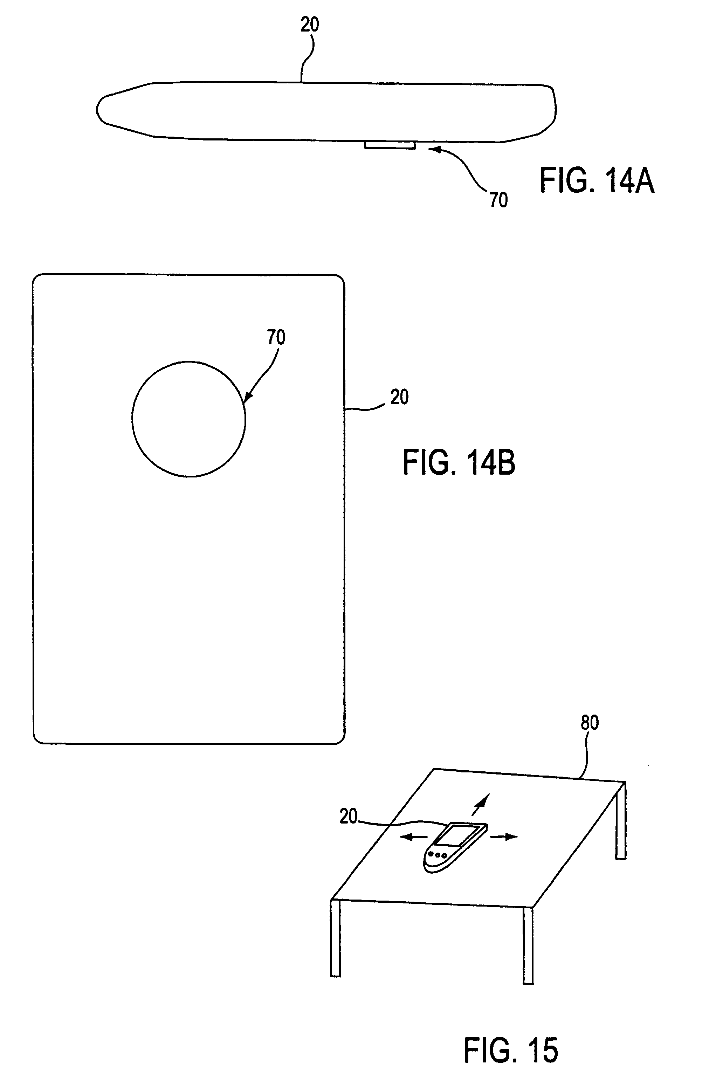

A further embodiment of the present invention utilizes a motion sensor which senses movement relative to a surface, such as a desk top or mouse pad. FIGURE 14 depicts two views of a hand held computer 20 incorporating a motion sensor 70 for sensing movement relative to a surface in accordance with one embodiment of the present invention. The hand held computer 20 may be a PDA or other electronic device such as a cellular phone. The motion sensor 70 may be any motion sensor capable of producing motion vector measurements in response to movement of the hand held computer 20 in relation to a substantially planar surface, including a trackball-type motion sensor found on a typical computer mouse 16. The motion sensor 70 may be mounted in any desired location on the hand held computer 20. Preferably the motion sensor 70 is mounted on the back of the hand held computer 20.

FIGURE 15 depicts a hand held computer 20 utilizing a motion sensor 70 for sensing movement relative to a surface, in use. By moving the hand held computer 20 over a surface 80, such as a desktop or table, the motion sensor 70 produces a motion vector measurement. The internal processor of the hand held computer 20 uses the motion vector measurement to generate a motion vector against some frame of reference. In this embodiment, the frame of reference is two-dimensional. In this way, a user is able to traverse a large two-dimensional object utilizing the same movements used to operate a typical computer mouse 16. The display on the hand held computer 20 displays varying portions or segments of the two-dimensional object depending on the movement of the device by the user.

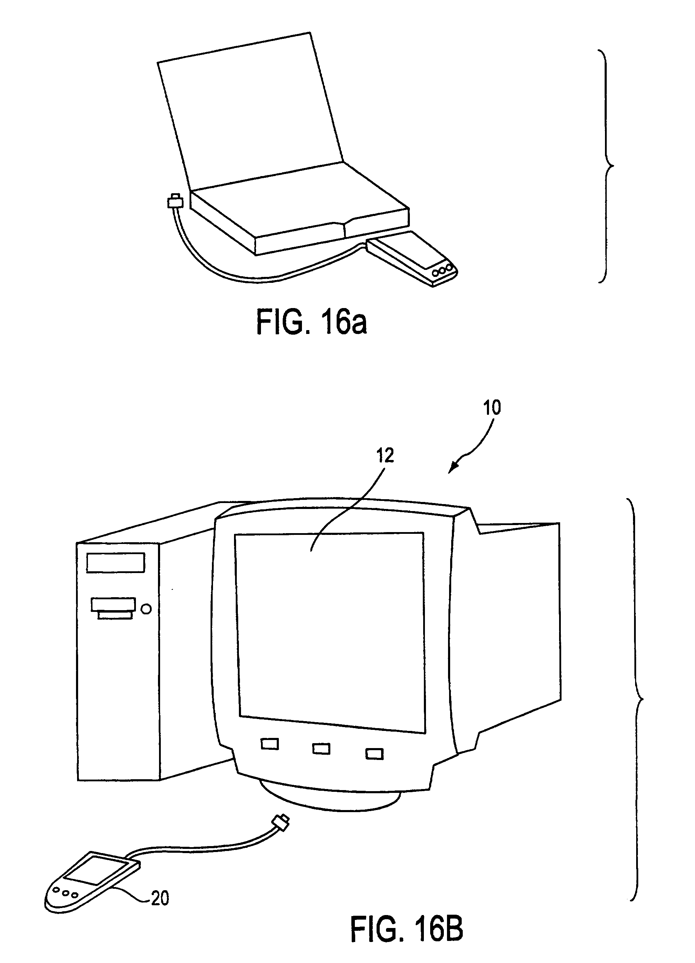

A further embodiment of the present invention utilizes a hand held computer 20 in conjunction with a traditional laptop or desktop computer 10, as shown in FIGURE 16. The hand held computer 20 includes a motion sensor for sensing motion relative to a surface, such as a table or desk top. The hand held computer 20 is coupled to the desktop computer 10 utilizing an electronic coupling means, including a connecting wire, infrared, or radio transmissions.

This embodiment enables a user to utilize the hand held computer 20 much like a typical computer mouse. The user is able to move the hand held computer 20 to select items displayed on the desktop computer's display device 12. In addition, the user is able to traverse virtual objects located in the memory of the hand held device 20 and use this information in conjunction with information contained in the desktop computer 10. For example, a user can use the motion of the hand held computer 20 to traverse a geographic map located in the memory of the hand held device 20. When the user wants to know more information about a specific area of interest currently displayed on the hand held computer's display device, the user can upload the specific geographic coordinates into the desktop computer 10 via the electronic coupling connection. The desktop computer 10 then uses coordinates from the hand held computer 20 in conjunction with an internal database to provide specific geographic information to the user.

In addition, the Internet may be used in conjunction with the desktop computer 10 and hand held computer 20 to provide additional information to the user. This furthers the previous example by utilizing the desktop computer to download additional geographic information utilizing Internet protocol. After uploading the coordinates into the desktop computer, as described above, the desktop computer is then utilized to search the Internet for addition geographical information. The desktop computer can search utilizing the uploaded coordinates from the hand held computer 20 directly, or the coordinates can be used in conjunction with an internal database to provide Internet search parameters. Once appropriate information is obtained from the Internet, it can be further downloaded into the hand held computer 20. For example, a more detailed geographic map may be downloaded from the Internet to the desktop computer 10 and subsequently uploaded to the hand held computer 20 for further traversal by the user. In this way, the information able to be displayed and utilized by the hand held computer 20 is greatly increased.

Another embodiment of the present invention could substitute a command, other than motion, from the user to traverse the virtual map. For example, magnification could be controlled by a button 61 while the movement along the x and y axis is still controlled by the motion of the device. Another aspect of the present invention would allow an axis to be frozen by the user. The advantage to this arrangement is that accidental movement along that axis would not change the display. For example, the user may want to see what is north of his position. In this case, the user would freeze the x-axis and z-axis, allowing movement only along the y-axis.

Another aspect of the present invention would allow the user to interact with two windows in the display of the device. In one window a map application as described above would run. The other window would run another application, such as a screen capture or word-processing application. For example, while navigating the virtual map in one window, the user could take notes in the other window, or capture a section of the virtual map in the other window. This allows the user to save certain sections of interest in the virtual map for later printing. In addition, if the user has access to another database, such as discussed above in relation to wireless remote systems, information about specific places of interest in the virtual map could be displayed in the one window while the user is traversing the virtual map in the first window.

As will be appreciated the technology of the present invention is not limited to geographic maps. Map viewers can also include but are not limited to architectural, fluidic, electronic, and optical circuitry maps. Other information content could include conventional pages of documents with text, tables, illustrations, pictures, and spreadsheets.

Architectural map programs can be used as navigational aids in an architectural setting such as in large buildings which contain a number of floors, or to identify the location in a warehouse setting based upon an often rectilinear arrangement of storage compartments and/or containers. In such cases, each floor or storage level is often displayed as a floor plan or shelf plan, which is another two-dimension object.

Fluidic (gas or liquid pipe networks and processing points), electronic, or optical circuitry maps can be shown as a collection of sheets of schematics, often detailing circuits which are portrayed as two dimensional objects. Included in such prior art systems are lofting systems, which are life size mosaic depictions of large, complex systems such as aircraft. The lofting system for the Boeing 747 is over 100 meters by 100 meters by 20 meters in size. The database itself is huge and the mechanisms to navigate such a system are clumsy and counter intuitive. This clumsiness translates into a loss of productivity, raising the expense of technical development and operational maintenance for such systems. The present invention address this issue by allowing the user to navigate such a lofting system in easy intuitive way. By using the motion driven navigation system of the present invention, a user can navigate the lofting system easily using only one hand. This system would also shorten the learning curve to navigate such a system because of the intuitive nature of using motion to navigate.

The 2-D object viewers and other applications running on the computer system of the present invention use an event queue, a standard element of the operating system and applications of both Palm OS™ and Windows CE, two commonly used real-time operating systems for hand held computers, PDAs, telephone-PDA hybrid devices and the like. An event queue contains events, which are happenings within the program such as mouse clicks or key presses. These events are successively stored in event queues ordered by oldest event first. The specifics of an event structure vary from system to system, and as such this discussion will focus on the most common elements of such entities. An event usually contains a designator as to the type of event, often including but not limited to button down, button up, pen down, pen up. Event queues are serviced by event loops, which successively examine the next provided event in the queue and act upon that event.

Both the PalmOS™ and Windows CE operating systems support at least one application running. Each application consists of at least one event loop processing an event queue. Hardware related events are usually either part of the operating system of the hand held device or considered "below" the level of the application program. "Higher level" event types such as menu selections, touching scroll bars, mouse buttons and the like are often handled in separate event queues, each with a separate concurrently executing event loop. Such concurrently executing program components are often referred to as threads.

Software interfaces to additional hardware, such as optional accessories, are often added to basic systems as threads running independently of the main event loop of each application and concurrently with these application event loops. Such additional event loops may process new hardware events, such as sensor measurements, and generate new data, which is incorporated into events placed into application event queues for application processing. One hardware accessory that the present invention uses is a motion sensor.

Motion sensing includes accelerometers and gyroscopic technologies, to name just two approaches. Gyroscopic sensors built as a cube approximately 1 cm on a side are available from Gyration, Inc. of Saratoga, California suitable for use in PDAs and other hand held or worn devices. Such gyroscopic devices interface to an electronic interface providing a 3-D motion sensing capability. Accelerometers can provide a measurement of motion in 1 dimension. Two accelerometers at right angles to each other can provide motion measurement in 2 dimensions. Three accelerometers positioned at right angles to each other can provide motion measurement in 3 dimensions.

Although only a few embodiments of the present invention have been described in detail, it should be understood that the present invention may be embodied in many other specific forms without departing from the spirit or scope of the invention. Therefore, the present examples are to be considered as illustrative and not restrictive, and the invention is not to be limited to the details given herein, but may be modified within the scope of the appended claims.

## Claims

1. A computer implemented method for assisting a user in the control and operation of a computer system, the computer system having a display device, the computer system providing information content for display, such information content potentially containing more content such as characters, pictures, lines, or pixels than can be conveniently displayed entirely on the display device at one time, the computer implemented method comprising the acts of:
coupling a display device to a computer system;
mapping information content generated by the computer system into a virtual desktop suitable for conveying the information to the user;
displaying a certain portion of the virtual desktop using the computer system's display device;
tracking movements of the display device; and
adjusting the displayed certain portion of the virtual desktop in a manner related to the tracked movements of the display device, whereby the user is able to traverse the entire information content mapped to the virtual desktop and examine any certain portion or segment of the information content using the computer system's display device.

2. A computer implemented method as recited in claim 1 wherein a virtual magnification of the displayed certain portion is updated in a manner correlated to the tracked movement of the display device.

3. A computer implemented method as recited in claim 1 wherein a first application executing upon the computer system is a physical map application providing a virtual map, the movement of the display device enabling visual navigation through the virtual map.

4. A computer implemented method as recited in claim 3 wherein the navigation capability of the physical map includes north, south, east, and west directional navigation through the virtual map.

5. A computer implemented method as recited in claim 3 wherein the navigation capability of the physical map further includes a scalability feature allowing adjustment of the scalability of the physical map in order to provide a viewer of the display device views of the physical map having different magnifications.

6. A computer implemented method as recited in claim 5 wherein the scalability feature is controlled according to tracked movement of the display device.

7. A computer implemented method as recited in claim 1, further comprising the act of providing the display device and the computer system as a hand-held personal digital assistant (PDA).

8. A computer implemented method as recited in claim 1 further comprising the act of adjusting the displayed certain portion or segment of the virtual desktop in a manner related to the tracked movements of the display device in relation to a substantially planar surface.

9. A computer implemented method as recited in claim 8 further comprising the act of updating a virtual magnification of the displayed certain portion in response to a command entered into the computer system by a user of the computer system.

10. A computer implemented method as recited in claim 1 further comprising the acts of:
monitoring a real scene in real space and time;
capturing images of the real scene; and
displaying the captured images of the real scene.

11. A computer system comprising:
a digital processor;
a display device coupled to the digital processor;
a motion sensor coupled to the display device; and
a computer readable medium coupled to the digital processor, the computer readable medium having computer executable instructions for:
mapping visual information generated by the computer system into a virtual desktop suitable for display via the display device;
displaying a certain portion of the virtual desktop via the display device;
tracking movement of the hand-held computer system via the motion sensor; and
updating the displayed certain portion of the virtual desktop in a manner correlated to the tracked movement of the hand-held computer system.

12. A hand held computer system as recited in claim 11 wherein the computer readable medium further comprises computer executable instructions for updating a virtual magnification of the displayed certain portion in a manner correlated to the tracked movement of the display device.

13. A hand held computer system as recited in claim 11 wherein the computer readable medium further comprises computer executable instructions for a physical map application providing a virtual map, the movement of the display device enabling visual navigation through the virtual map.

14. A hand held computer system as recited in claim 13 wherein the navigation capability of the physical map further includes a scalability feature allowing adjustment of the scalability of the physical map in order to provide a viewer of the display device views of the physical map having different magnifications.

15. A hand held computer system as recited in claim 11 wherein the computer system is a hand held personal digital assistant (PDA).

16. A computer system comprising:
a digital processor;
a display device coupled to the digital processor;
a motion sensor operable to track movements of the display device in relation to a reference surface; and
a computer readable medium coupled to the digital processor, the computer readable medium having computer executable instructions for:
mapping visual information generated by the computer system into a virtual desktop suitable for display via the display device;
displaying a certain portion of the virtual desktop via the display device;
tracking movement of the hand-held computer system via the motion sensor; and
updating the displayed certain portion of the virtual desktop in a manner correlated to the tracked movement of the hand-held computer system.

17. A hand held computer system as recited in claim 16 wherein the computer readable medium further comprises computer executable instructions for updating a virtual magnification of the displayed certain portion in response to a command entered into the computer system by a user of the computer system.
